**Europäisches Patentamt**

**European Patent Office**

**Office européen des brevets**

(11) Publication number: **0 137 874**
**B1**

## EUROPEAN PATENT SPECIFICATION

(45) Date of publication of patent specification: **07.01.88**

(21) Application number: **83306256.5**

(22) Date of filing: **14.10.83**

(51) Int. Cl.⁴: **F 16 B 13/04**

(54) **Expanding anchor fastener.**

(43) Date of publication of application:
**24.04.85 Bulletin 85/17**

(45) Publication of the grant of the patent:
**07.01.88 Bulletin 88/01**

(84) Designated Contracting States:
**AT BE CH DE FR GB IT LI LU NL SE**

(56) References cited:
**FR-A-2 200 917**
**GB-A-1 413 004**
**US-A-2 224 023**

**Industrial Fasteners Handbook, 2nd edition,**
**p.458, Trade & Technical Press Ltd., Morden,**
**Surrey, England**

(73) Proprietor: **Brown, Russell Lemuel**
**1620 Kingsbury Lane**
**Oklahoma City Oklahoma 73116 (US)**

(72) Inventor: **Brown, Russell Lemuel**
**1620 Kingsbury Lane**
**Oklahoma City Oklahoma 73116 (US)**

(74) Representative: **Allen, William Guy Fairfax et al**
**J.A. KEMP & CO. 14 South Square Gray's Inn**
**London WC1R 5EU (GB)**

Courier Press, Leamington Spa, England.

## Description

This invention relates generally to fasteners and more particularly to expanding or expandable anchor fasteners for fastening objects with respect to a wall or the like.

There are a wide variety of such fasteners, the most common of which is known generally as a spring wing toggle bolt and includes a pair of opposed wings which are hingedly connected to each other by a hinge element having a threaded bore hole therein (see Industrial Fasteners Handbook, 2nd Edition, p. 458, Trade & Technical Press Ltd., Morden, Surrey, England). A bolt is positioned through the threaded hole such that the wings can be threadedly moved along the bolt. A wire spring is extended about the hinge to move the wings to an open position. To use the spring wing toggle bolt, the wings are collapsed about the bolt, such that the wings and bolt can be inserted through a hole in a wall. Once through the wall, the wings spring open and are drawn back against the wall. By tightening the bolt, with the wings held against the wall, an object connected to the bolt can be anchored to the wall.

In order to make spring wing toggle bolts sufficiently strong to withstand threaded tightening and the leverage placed upon the wings at the hinge point, when the wings span the hole in the wall, the wings are generally formed of channel shaped pieces of metal. The channels extend about the bolt when the wings are collapsed to a closed position. The base portions of the wings engage each other, when the wings are in an open position and prevent the wings from axially moving beyond an open position as the wings are tightened against the wall.

Spring wing toggle bolts have generally been found to be satisfactory except for a few deficiencies. One of the most important of these deficiencies is the complexity and cost. Because the spring wing toggle bolt has many pieces which must be assembled and because these pieces must be separately formed and fitted together with relatively close tolerances, they are relatively more expensive than other types of fasteners. Moreover, spring wing toggle bolts can be unsatisfactory for certain uses. For example, when used in connection with gypsum wallboard, the channel shaped wings can cut the wallboard, weakening the anchorage, and can even cause complete failure of the anchorage with very little stress placed on the anchor.

In addition to spring wing toggle bolts there exists a wide variety of other types of expansion anchors. Among these are the rawl drive expansion plugs and wedge driven expanding shields. There are also single wing toggle bolts, which pivot about a threaded hinge and fixing devices comprising a screw and a body portion formed as a one piece moulding from a plastics material (GB—A—14 13 004). Generally, however, these devices are as complicated or more complicated than the spring wing toggle bolt and suffer from the same types of deficiencies and problems.

According to the present invention there is provided an expanding anchor fastener comprising a substantially cylindrical body, a wing support member extending axially from one end of said cylindrical body, an axial bore extending through said body and wing support member, said wing support having first and second planar opposed surfaces, first and second wings each being foldably connected to said wing support member along said first and second planar surfaces respectively, the wings each having an end adjacent the respective folding connection adapted to abut the respective planar surface, when the wings extend in the fully open, radially extending condition to prevent the wings from folding any further, means to urge the wings outwardly to an intermediate position and a bolt threadably engaged with said body whereby the bolt together with the body and the wings in a collapsed condition can be passed through an opening in a support surface, and the wings thereafter spring out and engage the rear of said surface and prevent the wings and body from rotating when the bolt is screwed into the body, to cause the wings to spread out to fully open position.

Such an expansion anchor is simpler and less expensive to manufacture.

Preferably said cylindrical body, said wing support member, said wings and said foldable connections are formed as a one piece moulding from a plastics material. This is not only simpler and less expensive, but is less likely to cause failure of the anchor due to cutting of the wall surface or the like.

A further advantage of forming the one piece plastic moulding is that said means urging the wings outwardly can simply result from the plastic memory of the folding connection.

In a preferred construction said first and second planar opposed surfaces are disposed substantially parallel to the axis of the bore and said ends of said first and second wings are substantially planar surfaces extending substantially perpendicular to the length of the wings. Advantageously the end of the cylindrical body adjacent said wing support member is arranged substantially perpendicular to said planar opposed surfaces and so disposed so as to be abutted by the outer surfaces of said wings when the latter are in the fully open, radially extending condition.

For a further understanding of the present invention, the following description is given, merely by way of example, reference being made to the accompanying drawings, in which:—

Figure 1 is a horizontal cross-sectional view of one embodiment of expansion anchor of the present invention shown anchoring an object to a wall, the section being taken along a central axis of the anchor;

Figure 2 is a side view of the expansion anchor portion of Figure 1 with the wing elements in a relaxed position;

Figure 3 is a rear view of the expansion anchor of Figure 1 with the wing elements in an open position;

Figure 4 is a side view of a modified form of expansion anchor with the wing elements in a collapsed position and having a steel nut therein; and

Figure 5 is a front end view of the expansion anchor of the present invention with the wing elements in a collapsed position.

The expansion anchor 11 comprises two pieces; a plastic anchor piece 13 and a bolt 15. The plastic anchor piece 13 has first and second wings 17 and 19, which are each foldably connected to a wing support member 21, which extends axially from a cylindrical body 23.

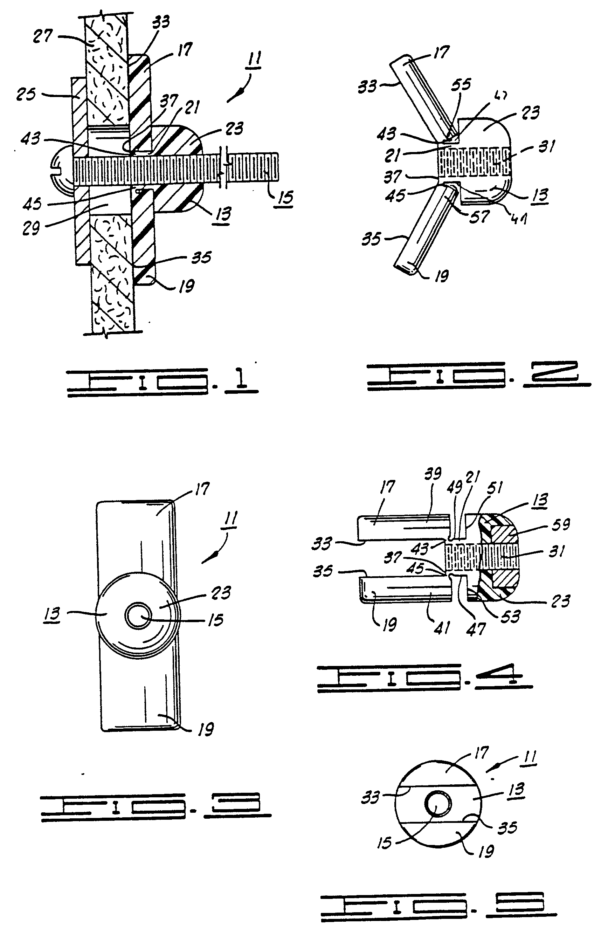

As shown especially in Figures 4 and 5, the entire anchor piece 13 generally conforms to a cylindrical configuration when the wings 17 and 19 are in a collapsed position. This is important since expansion anchors are usually inserted through cylindrical openings. As shown in Figure 1, the expansion anchor of the present invention can be utilized to anchor an object 25 to a wall 27 through a cylindrical hole 29 which is just slightly larger than the cylindrical body 23.

Extending through the cylindrical body 23 and the wing support member 21 is a threaded bore 31. The threaded bolt 15 is received in the bore 31, so that relative rotation of the bolt 15 therewith moves the anchor piece 13 along the bolt 15. Wings 17 and 19 each have a planar wall engagement surface 33 and 35, respectively. When the wings are in a collapsed position (see Figures 4 and 5), the wall engagement surfaces 33 and 35 extend axially adjacent to bolt 15. When the wings 17 and 19 are in an open position (see Figures 1 and 3) the wall engagement surfaces 33 and 35, together with the axial end 37 of the wing support member 21 form a single planar surface. When anchoring an object as shown in Figure 1, the outer edges of the wall engagement surfaces 33 and 35 engage the wall surface of a wall 27 and span the wall opening 29.

The outer surfaces 39 and 41 of wings 17 and 19, respectively, have a part-cylindrical surface of the same diameter as the cylindrical body 23. Because of this configuration the wings 17 and 19 fit through the same diameter hole that the cylindrical body 23 will fit and has a maximum amount of strength presented to the wall 27 when anchoring an object 25.

As shown in Figures 1, 2 and 4 wings 17 and 19 are connected to the end of the wing support element 21 by plastic folding hinges 43 and 45, respectively. These folding hinges 43 and 45 are located at the end of wall engagement surfaces 33 and 35. The folding hinges 43 and 45, wings 17 and 19 and the wing support member 21 and all formed of a single piece of plastic.

The wing support member 21 has opposed planar surfaces 47 and 49, which extend parallel to the axis of bore 31 and perpendicular to walls 51 and 53 which form the radial front end of cylindrical body 13. Together, surfaces 49 and 51 and 47 and 53 form recessed shoulder spaces on opposite sides of the cylindrical body 13. The rear ends or base portions 55 and 57 of wings 17 and 19 form shoulders which are received into these recessed shoulder spaces, when the wings 17 and 19 are moved to a fully open position, and are supported by the surfaces 48 and 47 of the wing support member and the walls 51 and 53 of the cylindrical body 23. The wings 17 and 19 are not able to move axially beyond the fully open position because of this support and because of the retention of the wings 17 and 19 by the folding hinges 43 and 45. Because the cylindrical body 23 is just slightly smaller than the wall hole 29, the wings 17 and 19 prevent the body 23 from moving back through hole 29 due to their size and due to their being supported in this radial position.

During the forming of the anchor piece 13, the folding hinges 43 and 45 are given a plastic memory which resiliently urges the wings 17 and 19 to the intermediate position of Figure 2, between the open position and the collapsed position. This intermediate position holds the wings 17 and 19 far enough apart so that they will engage the wall and spread to an open position after the anchor piece 13 is inserted through an opening 29 in a wall 27.

To utilize the expansion anchor of the present invention, the object 25 is first positioned so that bolt 15 extends through and retains the object 25. Next, the anchor piece 13 is threadedly connected to the bolt 15. As with a conventional spring wing toggle bolt, the bolt and anchor piece 13 are then inserted through a hole 29 in a wall 27.

As the anchor piece 13 is inserted through the hole 29, the wings 17 and 19 collapse so that the anchor piece will fit therethrough. After the wings 17 and 19 clear the wall 27 they spring open to a relaxed position as shown in Figure 2 as a result of the plastic memory of folding hinges 43 and 45. The anchor piece 13 is then drawn back against the wall 27 by bolt 15, such that the wings 17 and 19 encounter the wall 27 and are moved to an open position. With the anchor piece held against rotation by friction with the wall, the bolt 15 is screwed into the anchor piece 13. Complete tightening of the bolt 15 firmly anchors the object 25 to the wall 27.

Figure 4 illustrates an anchor piece 13 which is identical to the all-plastic pieces 13 shown in the other Figures, except that it includes a steel nut 59 embedded in the end of cylindrical body 23. This nut 23 is desirable to give added strength to the body 23 and the threaded connection to bolt 15. The nut 59 can be enclosed during the moulding process or attached by glue or the like.

It has been discovered that the expansion anchor of the present invention is stronger than conventional spring wing toggle bolts. In a comparison of a steel spring wing toggle bolt with the plastic anchor piece of the present invention joined to a bolt of the same size and utilizing the same wall material and the same diameter holes, the steel toggle bolt failed at 338 kg of tension while the plastic anchor piece of the present invention failed at 513 kg of tension.

In forming the plastic anchor piece of the present invention standard plastic materials and injection moulding techniques, well known to those skilled in the art, may be utilized. Various types of plastic materials having different qualities of resilience and strength might be used for different applications. Thus, an anchor piece for wood might be made of a different type of plastic from that of an anchor piece for gypsum wallboard.

One reason it is thought that the present invention will be better suited as an anchor fastener is that plastic is more resilient than steel. This allows some "give" as the fastener is stressed. Another reason that the present invention is an improved anchor fastener is that it anchors in a different manner. The present invention utilizes a cylindrical body 23 slightly smaller than wall hole 29. The wings 17 and 19 utilize a unique shoulder-type support to retain the wings in a radial position. The cylindrical body 23 not only provides this shoulder-type support, it also prevents withdrawal of the anchor due to the size of the wings 17 and 19. In other words, with the wings bent over body 23, the wings and body are too large to fit through hole 29.

Still another reason that the present invention has an improved strength capability is that the cylindrical body, the wing support member, and the wings join to form an almost solid presentation with respect to the wall. This is in contrast to the spring wing toggle bolts which present a channel shape structure to the wall which tends to cut the wall.

While the above embodiment is preferred the present invention also contemplates several other embodiments. For example, in one embodiment the bore 31 would not be threaded and a steel or plastic nut would be positioned behind the cylindrical body 23. If desired, this nut could be attached to or received in the body 23 as shown in Figure 4.

In another embodiment the present invention could be utilized in configurations which require a cylindrical side section to be removed from the cylindrical body 23, the wing support member 21, and the wings 17 and 19.

**Claims**

1. An expanding anchor fastener comprising a threaded bolt (15), an element (13) threaded onto said bolt, first and second oppositely extending wings (17, 19) pivotally mounted on said element and means urging said wings outwardly, whereby, when said bolt, together with the element and the wings in a collapsed condition are passed through an opening (29) in a support surface (27), the wings spring out and engage the rear of said surface and prevent the element and wings from rotating, when the bolt is screwed onto the element, to cause the wings to spread out to a fully open position, in which they extend transverse to the bolt axis, characterised in that said element (13) comprises a substantially cylindrical body (23), a wing support member (21) extending axially from one end of said cylindrical body, and an axial bore (31) extending through said body (23) and wing support member (21), said wing support member (21) having first and second planar opposed surfaces (47, 49), in that said first and second wings (17, 19) are each foldably connected (at 43, 45) to said wing support member (21) along said first and second planar surfaces (47, 49) respectively and in that said wings (17, 19) each have an end (55, 57) adjacent the respective folding connection (43, 45) adapted to abut the respective planar surface (47, 49) when the wings extend in the fully open, radially extending condition to prevent the wings from folding any further.

2. An expanding anchor fastener according to claim 1, characterised in that said cylindrical body (23), said wing support member (21), said wings (17, 19) and said foldable connections (43, 45) are formed as a one piece moulding from a plastics material.

3. An expanding anchor fastener according to claim 2, characterised in that said means urging the wings (17, 19) outwardly result from the plastic memory of said folding connections.

4. An expanding anchor fastener according to claim 2 or 3, characterised in that said body (23) has a metal nut (59) secured thereto with its threaded opening aligned with said bore (31).

5. An expanding anchor fastener according to any preceding claim, characterised in that said first and second planar opposed surfaces (47, 49) are disposed substantially parallel to the axis of the bore (31) and in that said ends (55, 57) of said first and second wings (17, 19) are substantially planar surfaces extending substantially perpendicular to the length of the wings.

6. An expanding anchor fastener according to claim 5, characterised in that the end (51, 53) of the cylindrical body (23) adjacent said wing support member (21) is arranged substantially perpendicular to said planar opposed surfaces (47, 49) and disposed so as to be abutted by the outer surfaces (39, 41) of said wings (17, 19), when the latter are in the fully open, radially extending condition.

7. An expanding anchor fastener according to any preceding claim, characterised in that said wings (17, 19) have outer, part-cylindrical surfaces (39, 41) substantially aligned with the cylindrical outer surface of the body (23) when the wings (17, 19) are in the collapsed condition.

8. An expanding anchor fastener according to any preceding claim, characterised in that the inner surfaces (33, 35) of said wings (17, 19) are substantially planar.

**Patentansprüche**

1. Spreizdübel mit einer Schraube (15), einem auf die Schraube geschraubten Element (13), einem ersten und zweiten sich in entgegengesetzte Richtungen erstreckenden Spreizflügel (17, 19), die schwenkbar an dem Element befestigt sind und mit einer Einrichtung, die die Spreizflügel nach außen zwängt, so daß, wenn die Schraube zusammen mit dem Element und den im zusammengeklappten Zustand befindlichen Spreizflügeln durch eine Öffnung (29) in einer tragenden Fläche hindurchgeführt werden, die Spreizflügel auseinandergehen und mit der rückwärtigen Seite der Fläche in Eingriff kommen und dadurch ein Drehen des Elementes und der Spreizflügel verhindern, sofern die Schraube in das Element eingeschraubt ist, um das vollständige Auseinanderspreizen der Spreizflügel herbeizuführen, wobei sich die Spreizflügel in dieser Position quer zur Schraubenachse erstrecken,

dadurch gekennzeichnet, daß das Element (13) einen im wesentlichen zylindrischen Körper (23) aufweist, von dem sich ein die Spreizflügel tragendes Glied (21) an einem Ende des zylindrischen Körpers in axialer Richtung erstreckt und eine axiale Bohrung durch den Körper (23) und das die Spreizflügel tragende Glied (21) vorgesehen ist,

daß das die Spreizflügel tragende Glied (21) eine erste und zweite ebene, sich gegenüberliegende Fläche (47, 49) aufweist,

daß der erste und zweite Spreizflügel (17, 19) jeweils mit dem tragenden Glied (21) längs der ersten und zweiten ebenen Fläche (47, 49) faltbar verbunden ist und daß die Spreizflügel jeweils ein Ende (55, 57) benachbart zu der entsprechenden, eine Faltung zulassenden Verbindung (43, 45) aufweisen, die ein Anschlagen gegen die entsprechenden ebenen Flächen (47, 49) zulassen, wenn die Spreizflügel sich in voller, radial erstreckender Spreizung befinden, um jegliches Zusammenklappen der Spreizflügel zu verhindern.

2. Spreizdübel nach Anspruch 1, dadurch gekennzeichnet, daß der zylindrische Körper (23), das die Spreizflügel tragende Glied (21), die Spreizflügel (17, 19) und die eine Faltung zulassenden Verbindungen (43, 45) als einstückiges Formteil aus Kunststoff hergestellt sind.

3. Spreizdübel nach Anspruch 2, dadurch gekennzeichnet, daß die Einrichtung, die die Spreizflügel (17, 19) nach auswärts zwingt, aus der Kunststoffeigenschaft der die Faltung zulassenden Verbindungen resultiert.

4. Spreizdübel nach Anspruch 2 oder 3, dadurch gekennzeichnet, daß der Körper (23) eine mit ihm fixierte Metallmutter (59) aufweist, deren gewindeversehene Öffnung mit der Bohrung (31) ausgerichtet ist.

5. Spreizdübel nach einem der Ansprüche 1 bis 4, dadurch gekennzeichnet, daß die erste und zweite ebene, sich gegenüberliegende Fläche (47, 49) im wesentlichen parallel zur Achse der Bohrung (31) angeordnet ist und daß die Enden (55, 57) des ersten und zweiten Spreizflügels (17, 19) im wesentlichen als ebene Flächen ausgebildet sind, die sich im wesentlichen senkrecht zur Längsrichtung der Spreizflügel erstrecken.

6. Spreizdübel nach Anspruch 5, dadurch gekennzeichnet, daß das dem die Spreizflügel tragenden Glied (21) benachbarte Ende des zylindrischen Körpers (23) im wesentlichen senkrecht zu den sich gegenüberliegenden ebenen Flächen (47, 49) vorgesehen ist und so angeordnet ist, daß es für die Außenflächen (39, 41) der Spreizflügel (17, 19), wenn diese vollständig auseinandergespreizt sind und sich in radialer Richtung erstrecken, einen Anschlag bildet.

7. Spreizdübel nach einem der vorausgehenden Ansprüche, dadurch gekennzeichnet, daß die Spreizflügel (17, 19) äußere, teilzylindrische Oberflächen (39, 41) aufweisen, die im wesentlichen mit der zylindrischen äußeren Fläche des Körpers (23) fluchten, wenn sich die Spreizflügel in ihrer zusammengeklappten Stellung befinden.

8. Spreizdübel nach einem der vorausgehenden Ansprüche, dadurch gekennzeichnet, daß die inneren Flächen (33, 35) der Spreizflügel (17, 19) im wesentlichen eben ausgebildet sind.

**Revendications**

1. Cheville d'écartement comprenant une tige filetée (15), un élément (13) vissé sur cette tige, une première et une seconde ailette (17, 19) s'étendant dans des sens opposés et articulées sur cet élément, ainsi qu'un moyen sollicitant les ailettes dans le sens de leur dépliage, dans un agencement tel que lorsque la tige, ensemble avec ledit élément et les ailettes en position repliée, est introduite dans un trou (29) d'une paroi de support (27), les ailettes, après avoir traversé le trou de la paroi, s'écartent élastiquement l'une de l'autre et sont appliquées contre le côté arrière de la paroi, de manière à empêcher la rotation dudit élément et leur propre rotation, lorsque la tige filetée est vissée dans l'élément pour provoquer le dépliage des ailettes jusqu'à une position complètement ouverte, position où les ailettes s'étendent transversalement à l'axe de la tige, caractérisée en ce que ledit élément (13) comporte un corps (23) qui est essentiellement cylindrique, un porte-ailettes (21) dépassant axialement d'une extrémité du corps cylindrique, de même qu'un trou axial (31) qui traverse le corps (23) et le porte-ailettes (21), lequel présente une première et une seconde surface planes et opposées (47, 49), en ce que les ailettes (17, 19) sont chacune reliée de façon pliante (en 43, 45) au porte-ailettes (21), le long respectivement desdites première et seconde surface plane (47, 49), et en ce que les ailettes (17, 19) possèdent chacune une extrémité (55, 57) située à côté de la liaison pliante (43, 45) concernée et destinée à venir s'appliquer contre la surface plane (47, 49) correspondante lorsque les ailettes se déplient à la position complètement ouverte, où elles sont orientées radialement, de manière à empêcher les ailettes de poursuivre ce mouvement de dépliage.

2. Cheville d'écartement selon la revendication 1, caractérisée en ce que le corps cylindrique (23), le porte-ailettes (21), les ailettes (17, 19) et les liaisons pliantes (43, 45) sont constitués par une seule pièce moulée d'une matière plastique.

3. Cheville d'écartement selon la revendication 2, caractérisée en ce que le moyen sollicitant les ailettes (17, 19) dans le sens de leur dépliage est constitué par l'effet mémoire des liaisons pliantes.

4. Cheville d'écartement selon la revendication 2 ou 3, caractérisée en ce qu'un écrou métallique (59) est fixé au corps (23) de manière que le trou fileté de l'écrou soit aligné avec ledit trou axial (31).

5. Cheville d'écartement selon l'une quelconque des revendications précédentes, caractérisée en ce que les première et seconde surfaces planes et opposées (47, 49) sont disposées à peu près parallèlement à l'axe dudit trou (31) et que les extrémités (55, 57) des ailettes (17, 19) sont des surfaces essentiellement planes qui sont sensiblement perpendiculaires à la longueur des ailettes.

6. Cheville d'écartement selon la revendication 5, caractérisée en ce que l'extrémité (51, 53) du corps cylindrique (23) située du côté du porte-ailettes (21) est sensiblement perpendiculaire auxdites surfaces planes et opposées (47, 49) et est disposée de manière que les surfaces extérieures (39, 41) des ailettes (17, 19) s'appuient contre elle lorsque les ailettes occupent la position complètement ouverte où elles sont orientées radialement.

7. Cheville d'écartement selon l'une quelconque des revendications précédentes, caractérisée en ce que les ailettes (17, 19) possèdent des surfaces extérieures (39, 41) partiellement cylindriques qui sont à peu près alignées avec la surface cylindrique extérieure du corps (23) lorsque les ailettes (17, 19) sont en position repliée.

8. Cheville d'écartement selon l'une quelconque des revendications précédentes, caractérisée en ce que les surface intérieures (33, 35) des ailettes (17, 19) sont sensiblement planes.

FIG. 1

FIG. 2

FIG. 3

FIG. 4

FIG. 5